# EUROPEAN PATENT SPECIFICATION

(11) **EP 1 605 662 B1**
(45) Date of publication and mention of the grant of the patent: **23.01.2013**
(21) Application number: 05010783.8
(22) Date of filing: 18.05.2005
(51) Int. Cl.: H04L 29/06, H04W 60/00

(54) **Mobile terminal, server, and method of controlling routing path for voice-over-IP service**
Mobiles Endgerät, Server und Verfahren zur Leitwegsteurung für Voice-over-IP Dienst
Terminal portable, serveur et procédé pour contrôler l'achimenement dans le service de voix-sur-IP

(30) Priority: 10.06.2004 KR 2004042451
(43) Date of publication of application: 14.12.2005
(73) Proprietor: Samsung Electronics Co., Ltd., Suwon-si, Gyeonggi-do, 443-742 (KR)
(72) Inventor: Kwon, Soon-Hwan, Yeongtong-gu Suwon-si Gyeonggi-do (KR)
(74) Representative: Grünecker, Kinkeldey, Stockmair & Schwanhäusser

(56) References cited:
- WO-A-03/085847
- JIN-WOO JUNG ET AL: "Performance evaluation of two layered mobility management using mobile ip and session initiation protocol" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 1190-1194, XP010677411 ISBN: 0-7803-7974-8
- VALI D ET AL: "A SIP-based method for intra-domain handoffs" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 2068-2072, XP010701365 ISBN: 0-7803-7954-3
- SCHULZRINNE H ET AL: "Application-layer mobility using SIP" SERVICE PORTABILITY AND VIRTUAL CUSTOMER ENVIRONMENTS, 2000 IEEE SAN FRANCISCO, CA, USA 1 DEC. 2000, PISCATAWAY, NJ, USA,IEEE, US, 2001, pages 29-36, XP010551460 ISBN: 0-7803-7133-X

## Description

The present invention relates to a mobile communication system, and more particularly to a mobile terminal, a session initiation protocol server, and a method for controlling a routing path, which are based on a Mobile Internet protocol (hereinafter, referred to as a "mobile IP"), a Voice-over-Internet Protocol (hereinafter, referred to as a "VoIP"), and a Session Initiation Protocol (hereinafter, referred to as an "SIP").

With the development of mobile communication technologies, techniques have been proposed for assigning IP addresses to personal mobile terminals, so that their users can use the Internet while moving.

A mobile IP is a technique for indicating mobility in Internet Protocol layers. The mobile IP enables users of mobile terminals to use the Internet without disruption of service while moving, by using protocols of various subscriber networks. The protocols of subscriber networks include, for example, xDSLs (Digital Subscriber Line and its variations), a WLAN (Wireless Local Area Network), a CDMA (Code-Division Multiple Access) 2000-1x, GPRS (General Packet Radio Services), and a WCDMA (wideband CDMA). The mobile IP combined with a VoIP enables mobile terminals to communicate through voice phones with subscribers of a public switched telephone network (PSTN), such as a local/toll telephone network. Also, the mobile IP combined with an H.323 video communication protocol enables mobile terminals to receive a mobile video phone service.

The SIP is a control protocol of an application layer used for establishing, modifying, and terminating a session or a call for multimedia communication, including voice and video.

An SIP user agent represents an SIP-based mobile terminal or an SIP-based mobile node (MN). An SIP server includes a proxy server, a location server, a redirect server, and a registra server, because these servers are physically located on the same platform.

The SIP user agent registers an IP address of a current location together with its own specific URI (address-of-record) in the registra server at an initiating step, and a correspondent terminal, or a correspondent node (CN), tries to establish a session connection with reference to an IP address of a corresponding mobile terminal registered in the registra server. Providing mobility by the SIP as described above enables a mobile terminal to perform communication with another mobile terminal or a new access point without changing its own SIP URI.

However, when a mobile terminal moves into a different network in a call-connected state, the mobile terminal has to receive a new IP so as to receive a voice packet in a new area, which causes a call to be disconnected. That is, the SIP supports mobility in an application level, but does not support mobility in a network level. However, when a mobile terminal uses the mobile IP together with SIP, the mobile terminal can maintain a call without disconnection even while moving. In other words, when a VoIP service using the SIP is performed, if the mobile IP is associated therewith, it is possible to maintain an SIP session without disconnection while a mobile terminal moves between different networks.

However, in the case of IPv4, when a mobile IP is used, a packet received by a mobile terminal has to pass through a home agent (HA), so that a triangular routing path is established. As a result, since a first path, of packets received by the mobile terminal, and a second path, of packets transmitted from the mobile terminal, are different from each other, callers may notice a difference in voice quality. Moreover, as the first path of packets received via the home agent lengthens, there is a commensurate deterioration of the quality of service (QoS) caused by such factors as packet loss, time delay, jitter, etc. Additionally, these and other factors cause an increase in the home agent's load.

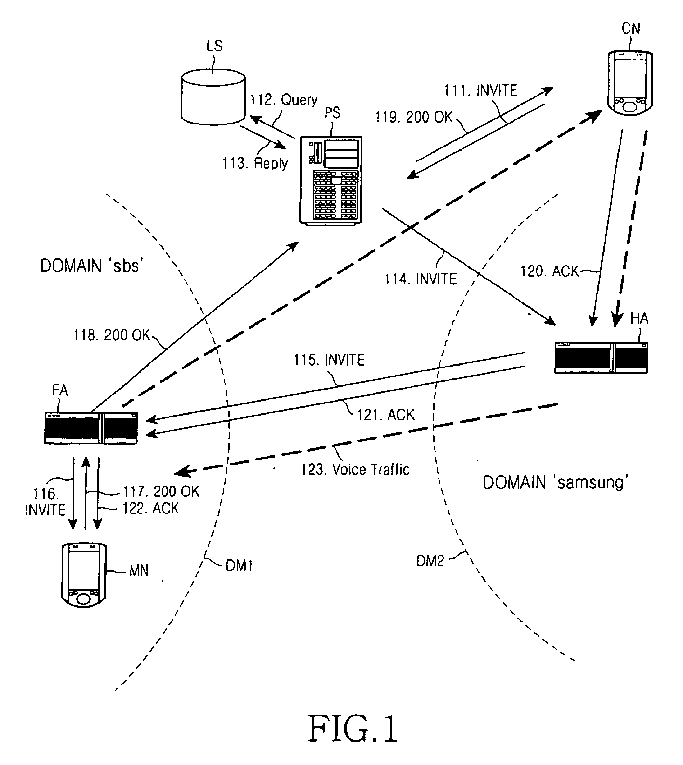

Meanwhile, before voice packets are exchanged between mobile terminals, a session through the SIP is established. In this case, when the SIP server operates as a proxy mode (a proxy server), the triangular routing problem is also caused between the mobile terminal and the SIP proxy server, as between the mobile terminal and the correspondent terminal. FIG 1 is a diagram illustrating a triangular routing problem in a VoIP service in a conventional mobile communication system based on a mobile IP, an SIP, and a VoIP Reference numeral 123 indicates a triangular routing form for voice traffic, which is connected from a correspondent terminal (CN) 14 to a home agent 10, from the home agent 10 to a foreign agent 12, and from the foreign agent 12 to the correspondent terminal 14.

Recently, routers have used an ingress-filtering function when a source address is not correct from the viewpoint of a network topology. For example, in a network environment such as IPv4, there are some cases in which a reverse tunneling mode must be used. In this case, a path for an up-link and a path for a down-link are identical to each other, but data transmitted between two callers must pass through the home agent, so that their transmission pathways are unnecessarily lengthened. In addition, since traffic is concentrated at the home agent, the quality of communication deteriorates, and what is worse, the system may crash. Herein, the ingress-filtering is a function which is used when a source address of an IP packet is not correct from the viewpoint of a network topology. That is, according to the ingress-filtering function, a source address field of an IP header is checked, and a packet is removed if the packet is received from an address which is inappropriate for a corresponding link.

A solution to the triangular-path routing problem discussed above is a routing optimization method that has been proposed for use with mobile IP. According to this method, the correspondent terminal 14 binds and stores a home address and a current location (care-of address; hereinafter, referred to as "CoA") of the mobile terminal 16 (i.e., a mobile node) in a cache, so that the correspondent terminal 14 can perform the tunneling of a packet directly to the CoA of the mobile terminal, without passing through the home agent 10. Herein, tunneling is a technique used to encapsulate a packet, which will be transmitted, with a header capable of being routed, and then to transmit the packet. The encapsulation is necessary because routing is impossible when a receiver address of the packet is not identical to a domain address format of an area in which the receiver is located. However, in this case, there is an additional burden in that a routing-optimized home agent 10 or a routing-optimized foreign agent 12 must be established and newly installed.

The publication titled "Performance evaluation of two-layered mobility management using mobile IT and Session Initiation Protocol" by Jin-Woo Jung et at, Globecome 2003 - IEEE Global Telecommunications Conference, San Francisco, December 1 to 5, 2003 refers on page 1190, left column to a triangular routing problem which adds delay to a network in classical Mobile IP case. Tunneling is required and adds the overhead for bandwidth constrained wireless links. While a SIP-based approach offers several advantages over a corresponding MIP-based solution, the main problem continues that the handoff mechanism in SIP can cause call disruption if the new SIP session has not created completely while the mobile terminal is in the overlapped area. A network layer solution i.e. Mobile IP is compared with an application layer solution i.e. SIP, to support terminal mobility in VoIP services and an integrated model is proposed to reduce the inter-domain handoff delay in VoIP services in a mobile environment.

The publication titled "A SIP-based method for intra-domain handoffs" by Vali D. et at, Vehicular Technology Conference, 2003, IEEE 58th Orlando, USA, 6 to 9 October, 2003, pages 2068 to 2072, ISBN: 0-7803-7954-3 refers to mobility management issue in IP access networks. An approach is described that includes the use of the Session Initiation Protocol, SIP, and its associate entities for mobility signaling. Following this approach, existing SIP functionality in a network can be reused for mobility management purposes, providing efficient utilization of resources. The hierarchical Mobile SIP, HMSIP, framework is discussed and a SIP-based Intra-domain mobility management approach that builds upon the general framework of SIP mobility management. The HMSIP Agent is introduced as a boarder network entity providing the necessary mobility functionality.

WO 03/085847 A2 refers to methods and apparatus for supporting session registration messaging.

The publication titled "Application-layer mobility using SIP" by Schulzrinne H et al, Service Portability and Virtual Customer Environments, 2000, IEEE San Francisco, USA, pages 29 to 26, ISBN: 0.7803-7133-X refers to mobile internet multi-media applications and describes how the Session Initiation Protocol, SIP, can help to provide terminal, personal, session and service mobility to applications ranging from Internet Telephony to presence and instant messaging. Application layer mobility for streaming multi-media applications initiated by RTSP is briefly discussed.

The present invention has been made to solve the above mentioned problems occurring in the prior art.

It is the object of the present invention to provide an apparatus and method for improving the communication quality of VoIP and for efficiently managing a network using an SIP server and a mobile terminal, by minimizing a load on the network and optimizing a routing path of traffic when mobile IP is used, as well as for achieving a VoIP service capable of maintaining a session during movement.

This object is solved by the subject matter of the independent claims.

Preferred embodiments are defined in the dependent claims.

To accomplish this object, in accordance with one aspect of the present invention, there is provided a method for controlling a routing path for a voice-over-internet protocol service based on a mobile internet protocol and a session initiation protocol, the method including the steps of a mobile terminal sensing movement of the mobile terminal into a different network and performing a mobile internet protocol re-registration; the mobile terminal transmitting a register message, which includes an FACoA (Foreign Agent Care-of Address) and a home address of the mobile terminal, to a session initiation protocol server after performing the mobile internet protocol re-registration through a foreign agent, thereby carrying out a session initiation protocol registration; the session initiation protocol server creating a first tunnel between the session initiation protocol server and the foreign agent with reference to the register message when receiving an invite message from a correspondent terminal after the session initiation protocol registration is carried out, and transmitting the invite message to the mobile terminal through the first tunnel; and the foreign agent creating a second tunnel between the foreign agent and the correspondent terminal when receiving a response from the mobile terminal having received the invite message, and the mobile terminal and the correspondent terminal exchanging voice packets with each other through the second tunnel.

In accordance with another aspect of the present invention, there is provided a mobile terminal based on a mobile internet protocol, a voice-over-internet protocol, and a session initiation protocol, the mobile terminal including a sensing unit for sensing movement of the mobile terminal into a different network; a register-message generating unit for generating a register message including a home address and a CoA (Care-of-Address) when location movement of the mobile terminal is sensed; and a transmitting unit for transmitting the register message to a session initiation protocol server.

In accordance with still another aspect of the present invention, there is provided a session initiation protocol server including a storage unit for storing a register message which includes a CoA and a home address transmitted from a first mobile terminal; a detecting unit for detecting the CoA of the first mobile terminal in the storage unit, in response to an invite message for the first mobile terminal transmitted from a second mobile terminal; and a transmitting unit for transmitting the invite message to the first mobile terminal according to the CoA of the first mobile terminal.

The above object and other aspects, features and advantages of the present invention will be more apparent from the following detailed description taken in conjunction with the accompanying drawings, in which:
FIG. 1 is a diagram which illustrates a triangular routing problem in a VoIP service in the conventional mobile communication system based on a mobile IP, an SIP, and a VoIP;
FIG 2 is a table illustrating a construction of an SIP register message in a visitor network according to a first embodiment of the present invention;
FIG. 3 is a flow diagram for explaining a method of controlling a routing path for a VoIP service according to a second embodiment of the present invention, with respect to an example using an FACoA;
FIG. 4 is a flow diagram for explaining a method of controlling a routing path for a VoIP service according to a third embodiment of the present invention, with respect to an example using a Collocated CoA (C-CoA);
FIG 5 is a flow diagram showing a signaling sequence in which the mobile terminal notifies the correspondent terminal of a changed FACoA of the mobile terminal, when the mobile terminal moves from a network to another network during a session, according to a fourth embodiment of the present invention;
FIG 6 is a flow diagram showing a signaling sequence, in which the mobile terminal notifies the correspondent terminal of a changed C-CoA of the mobile terminal, when the mobile terminal moves from a network to another network during a session, according to a fifth embodiment of the present invention;
FIG 7 is a detailed view for explaining the mobile IP re-registration and SIP registration process shown in FIG. 3; and
FIG 8 is a detailed view for explaining a routing-path optimizing process of a VoIP traffic using the SIP shown in FIG. 3.

Hereinafter, preferred embodiments according to the present invention will be described with reference to the accompanying drawings. Although a number of specific features, such as a domain name, an address, etc., are given below, they are presented for a better understanding of the present invention only. Also, it will be clear to those skilled in the art that the present invention can be practiced without such specific features. In the following description of the present invention, a detailed description (for example, operation of a mobile IP) of known functions and configurations incorporated herein will be omitted when it may make the subject matter of the present invention rather unclear.

In the present invention, it is assumed that a mobile terminal (MN) having a mobile IP function is using a VoIP service utilizing an SIP in a different (visitor) network. Also, in order to achieve the methods and constructions of the present invention, the MN is equipped with a mobile IP and an SIP user agent, a home agent, a foreign agent, an SIP server (a proxy server, a registra server, and a location server), and a correspondent terminal CN for communicating with the MN are included.

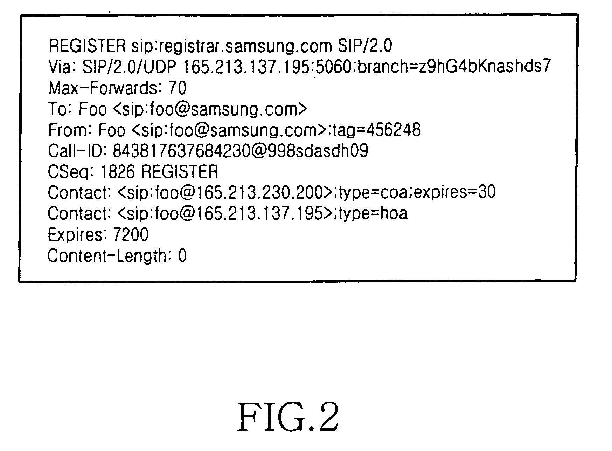

FIG. 2 is a table which shows a construction of an SIP register message in a visitor network according to a first embodiment of the present invention.

The register message according to the present invention uses new parameters together with a contact header. In order to distinguish whether an address indicated by a contact header is a home address or a CoA (Care of Address), a new parameter "type" is defined. For example, "type = hoa" represents that an address indicated by a contact header is a home address, and "type = coa" represents that an address indicated by a contact header is a CoA. A parameter "expires" represents an available period of the register message, which is expressed in terms of minutes. For example, as shown in FIG. 2, "expires=30" indicates that the available registration period is 30 minutes. If the parameter "expires" exists in only a specific contact header, only information of the specific contact header expires when its available period is over. Therefore, it is necessary to send another register message for re-registration before expiration.

As shown in FIG 2, an address-of-record of a mobile terminal is "sip:foo@samsung.com". Also, a home address is "sip:foo@165.213.230.200", and a CoA is "sip:foo@165.213.137.195". Therefore, the location server stores the home address and the CoA in the address-of-record of the mobile terminal, mapping the home address and the CoA.

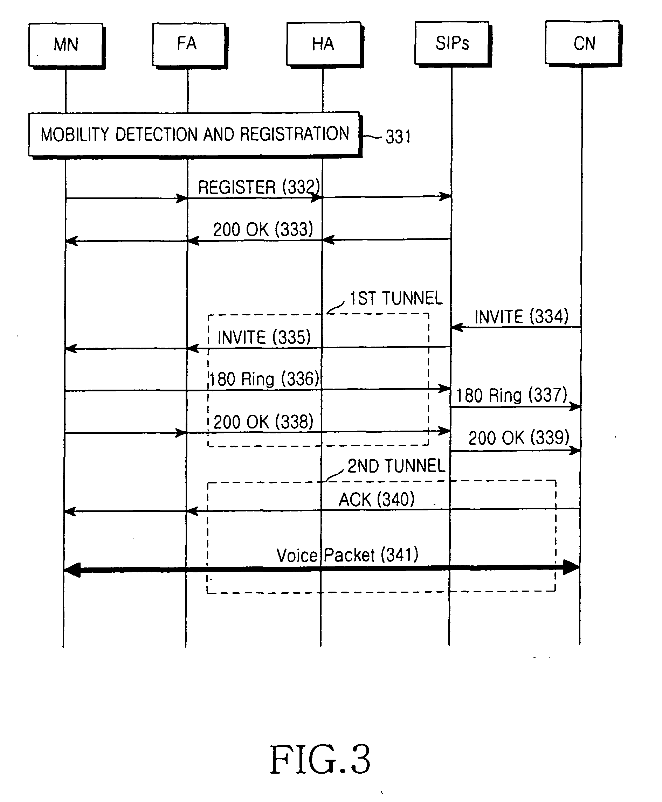

The location server, which is a type of database server, functions to reply to a registration or a query of an address-of-record, which is requested from the registra server or the proxy server. When the mobile terminal loads its own CoA (IP address) in a register message and sends it, the registra server receives the CoA and stores the CoA, together with the specific URI of the mobile terminal (which is called an address-of-record that means an URI registered in the location server), in the location server. When the proxy server receives an invite message from a first mobile terminal, the proxy server queries a location of a second mobile terminal, which is indicated by an URI included in the invite message, to the location server. Next, after establishing the location of the second mobile terminal, the proxy server transmits the invite message to the second mobile terminal. The above-mentioned servers are shown as "SIPs (SIP server)" in FIGS. 3 to 6, without distinction of the respective servers for the sake of convenience. However, in the following description, each of the servers will be differentially represented. But, it should be understood that the servers may be represented as an SIP server when it is unnecessary to distinguish between the respective servers or when it is not necessary to name all of the servers.

Meanwhile, when a mobile terminal is located in a home network, only a home address is registered in accordance with the conventional method, without using the parameter "type" as described above.

In the following description of FIGS. 3 to 6, it is assumed that a mobile terminal registers its home address as a current location through a register message in a home network before mobility detection and registration (as indicated by steps 331, 441, 551, or 661, in FIGS. 3, 4, 5, or 6, respectively) are performed. Additionally, it should be understood that the operation of the mobility detection and registration (as indicated by steps 331, 441, 551, or 661, in FIGS. 3, 4, 5 or 6, respectively) is performed in a mobile IP layer, and the following operations are performed in an SIP layer.

An application of a mobile terminal operating as shown in FIGS. 3 through 6 is called a user application, which includes a UAC (User Agent Client) and a UAS (User Agent Server). The UAC is a client application for creating and transmitting an SIP request message. The UAS is a server application for creating and transmitting a response message, which includes a meaning of acceptance, rejection, or redirection with a change of a receiving address and retransmission. For convenience, these will be described as applied to a mobile terminal in the following description.

FIG. 3 is a flow diagram for explaining a method of controlling a routing path for a VoIP service according to a second embodiment of the present invention, with respect to an example of using a foreign agent CoA.

In step 331, when a mobile terminal 30 in a standby state having been located in a home network moves into a different network, mobility detection is performed by a mobile IP mechanism of the mobile terminal 30, and then the mobile terminal 30 requests registration to the home agent 34.

In step 332, the mobile terminal 30 transmits a register message, that includes a contact header into which its own home address and a new CoA - a foreign agent CoA (hereinafter, referred to as "FACoA") are recorded, to the foreign agent 32. In this case, in order to discriminate between the two addresses, the parameter "type" is used as described in the above-mentioned FIG. 2.

The foreign agent 32 transmits the register message to the SIP server 36, that is, to the registra server, via the home agent 34. Then, the registra server receives and transfers the new FACoA and the home address of an address-of-record of the mobile terminal 30 to the location server, and the location server stores the information transferred from the registra server.

Meanwhile, the foreign agent 32 understands the message transmitted from the mobile terminal 30 to be a register message by parsing the message, and checks information of a contact header and the like. Additionally, during this time period, the foreign agent 32 can obtain desired information which is needed for tunneling between the foreign agent 32 and the proxy server, that is, the FACoA and a server IP address.

Herein, the register message may be directly transmitted from the foreign agent 32 to the registra server, or may be transmitted from the foreign agent 32 to the registra server via the home agent 34 as shown in FIG 3, according to a reverse-tunneling setup state of a mobile IP.

In step 333, a "200 OK" message, which is a response message of the registra server with respect to the register message, is transmitted to the mobile terminal 30 through a tunnel (not shown) established between the registra server and the foreign agent 32 via the home agent 34. The foreign agent 32 parses the "200 OK" message and confirms that a response has been successfully received. After confirming that a response has been successfully received, "tunneling" between the foreign agent 32 and the proxy server can be created. FIG 3, a first tunnel 11 represents a tunnel created between the foreign agent 32 and the proxy server 36.

In step 334, a correspondent terminal 38, of a party who wants to perform VoIP communication with the user of the mobile terminal 30, transmits an invite message to the SIP server 36, that is, the proxy server. In step 335, the proxy server extracts the home address and the FACoA of the corresponding mobile terminal 30 from the location server using the address-of-record as a key. The proxy server transmits the invite message to a current location of the mobile terminal 30 through the first tunnel 11 with reference to the extracted information, and then the invite message is transmitted to the mobile terminal 30 after being decapsulated in the foreign agent 32. During this time period, the foreign agent 32 can obtain, from the invite message, information which is necessary for creating a second tunnel 21 between the foreign agent 32 and the correspondent terminal 38, in which the necessary information is an IP address of the correspondent terminal 38, because an end point of a second tunnel 21 corresponds to the correspondent terminal 38 from the viewpoint of the foreign agent 32.

In step 336, when the mobile terminal 30 generates and transmits a "180 Ring" message, the foreign agent 32 receives and transmits the "180 Ring" message to the proxy server through the first tunnel 11 which has been established between the foreign agent 32 and the proxy server. In step 337, the proxy server receives and transmits the "180 Ring" message to the correspondent terminal 38.

In step 338, a "send" button of the mobile terminal 30 is pressed by a user, and the mobile terminal 30 records its own home address and the FACoA in the contact header of the "200 OK" message, and transmits the "200 OK" message to the foreign agent32. The foreign agent 32 transmits the "200 OK" message to the proxy server through the first tunnel 11. In step 339, the "200 OK" message is transmitted to the correspondent terminal 38 by the proxy server 36. Then, the correspondent terminal CN parses the "200 OK" message, and can obtain information needed for creating a second tunnel 21 between the correspondent terminal 38 and the foreign agent 32, which contains an IP address of the foreign agent 32, that is, the FACoA, because an end point of a second tunnel 21corresponds to the foreign agent 32 from the viewpoint of the correspondent terminal 38. In step 340, the correspondent terminal 38 transmits an ACK message to the mobile terminal 30 through the second tunnel 21, so that the mobile terminal 30 and the correspondent terminal 38 can exchange voice packets with each other through the second tunnel 21 as shown in (step 341).

According to the method of the present invention described above, it can be understood that transmitted messages do not pass through the home agent 34 from the time that an invite is initiated to the time that terminals exchange voice packets with each other.

IPinIP (IP Encapsulation within IP) (RFC 2003), Minimal Encapsulation (RFC 2004), or GRE (General Routing Encapsulation) (RFC 1701) may be used as a protocol for the tunneling. In addition, it is possible to refer to IETF 'RFC 2003' and 'RFC 2004' for specifications relating to the tunneling.

A description will be given in detail for a method for creating the first tunnel 11 between the foreign agent 32 and the SIP server 36.

From the viewpoint of the foreign agent 32, the foreign agent 32 receives a register message from the mobile terminal 30, transmits the register message to the SIP server 36, and then enters a standby state, waiting for a response from the SIP server 36. After this, when receiving a response message from the SIP server 36, the foreign agent 32 parses the response message, that is, an SIP message. As a result of the parsing, when the response message is a "200 OK" message, the foreign agent 32 creates the first tunnel 11, end points of which are its own address (FACoA) and a source IP address (an SIP network server address).

In contrast, from the viewpoint of the SIP server 36, the registra server receives a register message, registers a location of a corresponding mobile terminal 30 in the location server (that is, stores a home address, an FACoA, and an expiration value), and creates the first tunnel 11 which uses its own address and the FACoA of the mobile terminal 30 understood through the register message.

Herein, the "tunnel" means a virtual link between two nodes, for example, between the foreign agent 32and the SIP server 36, and "creating a tunnel" means that a corresponding node recognizes where both end points of the tunnel exist. An expiration period of the first tunnel 11 is established as a value corresponding to the parameter "expires" of a CoA in a register message. In order to maintain the first tunnel 11, it is necessary to update the first tunnel 11 with a new register message within an established expiration period. If the foreign agent FA does not receive the "200 OK" message but instead receives a different response, or does not receive any response until a predetermined period of time lapses, the foreign agent 32determines that the creation of the first tunnel 11 has ended in a failure. Also, when an expiration period has lapsed, the first tunnel 11 is automatically eliminated. Therefore, it receives an invite message from the correspondent terminal 38 after the first tunnel 11 is eliminated, the SIP server SIPs transmits the invite message with the home address of a corresponding mobile terminal MN as a destination because the first tunnel 11 connected to the foreign agent FA does not exist. In this case, the invite message is transmitted in sequence as follows: from the correspondent terminal 38 to the SIP server 36 to the home agent 34 to the foreign agent 32 and then, to the mobile terminal 30.

A description will be given in detail for a method for creating the second tunnel 21 between the foreign agent 32 and the correspondent terminal 38.

The foreign agent 32 parses the invite message received from the correspondent terminal 38, reads an IP address of the correspondent terminal 38 which is included in a contact header, and waits for the "200 OK" message to be transmitted from the mobile terminal 30. When it receives the "200 OK" message, the foreign agent 32 creates the second tunnel 21, both end points of which are its own address and the correspondent terminal 38, and then transmits an ACK message, which is received from the correspondent terminal 38 through the second tunnel 21, to the mobile terminal 30. The second tunnel 21 has no connection with the parameter "expires", and expires when a "200 OK" message is received in response to a BYE message. Herein, the BYE message is a request message, which is transmitted by an UAC to an UAS when the end of a call is desired during a media session.

In contrast, from the viewpoint of the correspondent terminal 38, the correspondent terminal 38 creates the second tunnel 21, both end points of which are its own address and an FACoA of a mobile terminal 30 understood by a received "200 OK" message.

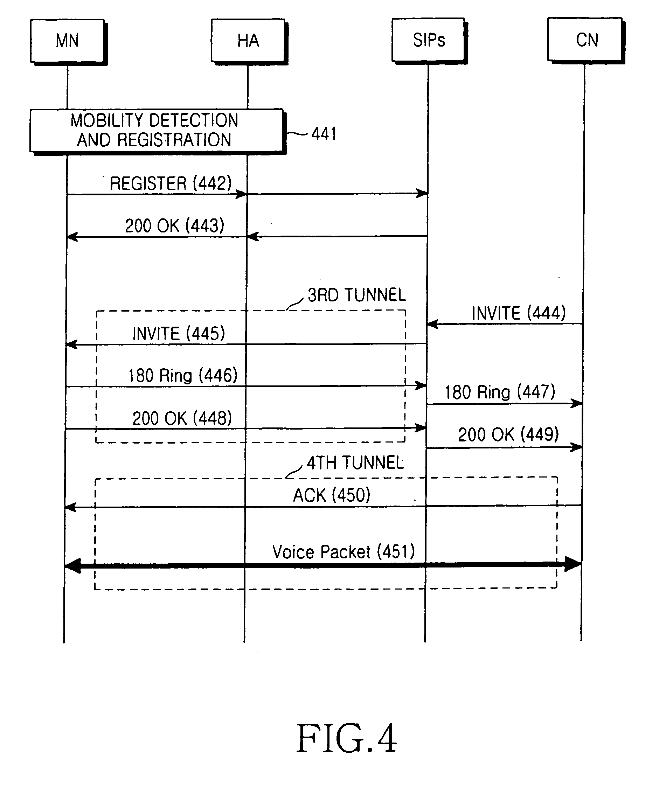

FIG 4 is a flow diagram for explaining a method of controlling a routing path for a VoIP service according to a third embodiment of the present invention, with respect to a case of using a Collocated CoA (hereinafter referred to as a "C-CoA").

The FACoA is an IP address of a foreign agent, which interfaces a mobile terminal to a foreign network where a mobile terminal 40 is visiting. In contrast, the C-CoA (Collocated CoA) is an IP address which is temporarily assigned for interfacing with a mobile terminal itself. The C-CoA represents a current location of a mobile terminal which is located in a foreign network. When an end point of a tunnel, which is established by a home agent for transmitting a packet, is a mobile terminal, the mobile terminal has to have the capability of decapsulating encapsulated packets, and in this case, the CoA used by the mobile terminal is the C-CoA.

As compared with the embodiment shown in FIG. 3, the embodiment shown in FIG. 4 uses the mobile terminal 40 as an end point of a tunnel, while the embodiment shown in FIG. 3 uses a foreign agent 32 as an end point of a tunnel. In the following description, an SIP signaling sequence will be explained in detail with respect to an example in which a mobile terminal 40 uses the C-CoA with reference to FIG 4.

In step 441, when the mobile terminal 40 in a standby state having been located in a home network moves into a different network, mobility detection is performed by a mobile IP mechanism of the mobile terminal 40, and the mobile terminal MN transmits a registration request message to the home agent 42.

In step 442, the mobile terminal 40 transmits a register message, that includes a contact header into which its own home address and a new C-CoA are recorded, directly to the SIP server 44, that is, the registra server. In this case, in order to detect a difference between the two addresses, the parameter "type" is used (as shown in FIG. 2 and described in the corresponding text).

In step 443, the registra server generates a "200 OK" message in response to the register message, and transmits the "200 OK" message to the mobile terminal 40 through the home agent 42.

In step 444, a correspondent terminal 46, of a party who wants to perform VoIP communication with the user of the mobile terminal 40, transmits an invite message to the SIP server 44, that is, the proxy server. The proxy server extracts the home address and the C-CoA of the mobile terminal 40 from the location server by using the address-of-record as a key. The proxy server establishes a third tunnel 31 between the proxy server and the mobile terminal 40 with reference to the extracted information, and transmits an invite message to the mobile terminal 40 through the third tunnel 31.

In step 445, the invite message is received by the mobile terminal 40, and is decapsulated.

In step 446, the mobile terminal 40 transmits a "180 Ring" message to the proxy server through the third tunnel 31.

In step 447, the proxy server transmits the "180 Ring" message to the correspondent terminal 46.

In step 448, a "send" button of the mobile terminal 40 is pressed by a user, and the mobile terminal 40 records its own home address and the C-CoA in the contact header of the "200 OK" message, and transmits the "200 OK" message to the proxy server.

In step 449, the proxy server transmits the "200 OK" message to the correspondent terminal 46.

The mobile terminal 40 and the correspondent terminal 46 can obtain information needed for tunneling in steps 445 and 449 respectively. That is, the mobile terminal 40 can obtain the IP address of the correspondent terminal 46 from the received invite message in step 445, and the correspondent terminal 46 can obtain the C-CoA of the mobile terminal 40 from the received "200 OK" message. A fourth tunnel 1 represents a tunnel both end points of which are the mobile terminal 40 and the correspondent terminal 46.

In step 450, the correspondent terminal 46 transmits an ACK message to the mobile terminal 40, not through the home agent 42, but through the fourth tunnel 41, which has been established between the correspondent terminal 46 and the mobile terminal 40.

In step 451, the mobile terminal 40 and the correspondent terminal 46 exchange voice packets with each other through the fourth tunnel 41, and thus bypass the home agent 42 as shown.

IPinIP (RFC 2003), Minimal Encapsulation (RFC 2004), or GRE (RFC 1701) may be used as a protocol for the tunneling according to the embodiments of the present invention.

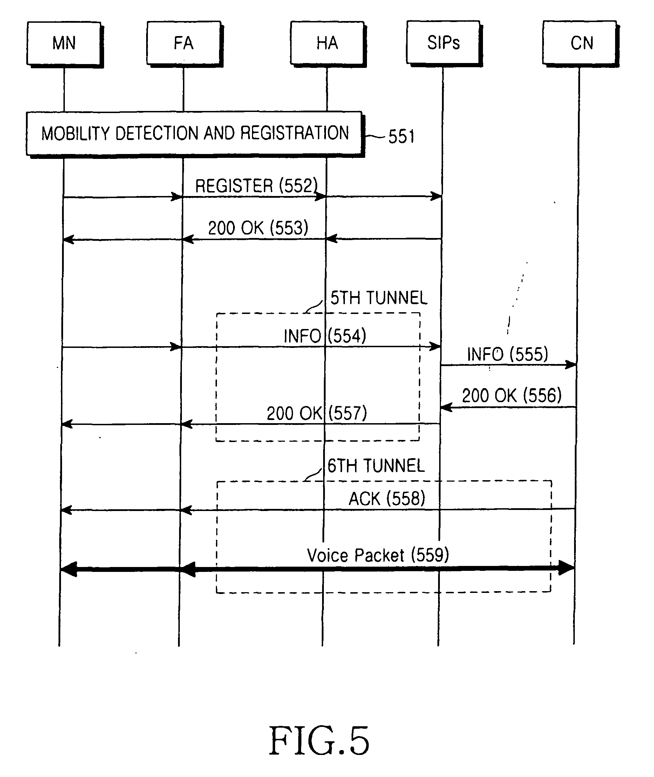

FIG 5 is a flow diagram showing a signaling sequence in which a mobile terminal 50 notifies a correspondent terminal 50 of a changed CoA of the mobile terminal 50, when the mobile terminal 50 moves from a network to another network during a session, according to a fourth embodiment of the present invention. Herein, it is assumed that FACoA is used as described in the embodiment which is shown in FIG 3.

The description of the operations of steps 551 to 553 will be omitted as they are identical to the operations of steps 331 to 333 as shown in FIG 3 respectively.

The SIP server 56, that is, the registra server, and the foreign agent 52 obtain an FACoA and a server IP address, which are included in a register message transmitted from the mobile terminal 50 in step 552, so that a fifth tunnel 51 can be created.

In step 554, the mobile terminal 50 transmits an information message (hereinafter referred to as an "INFO message") to the SIP server 56, that is, the proxy server, through the foreign agent 52. In this case, the INFO message is transmitted through the fifth tunnel 51 created between the proxy server and the foreign agent 52. In step 555, the proxy server transmits the INFO message to the correspondent terminal 58.

In step 556, the correspondent terminal 58, having received the INFO message, replaces an end point of the fifth tunnel 51 with a newly changed FACoA. In addition, the correspondent terminal 58 generates a "200 OK" message in response to the INFO message, and transmits the "200 OK" message to the proxy server. In step 557, the proxy server transmits the "200 OK" message to the foreign agent 52 through the fifth tunnel 51, and then, the foreign agent 52 transmits the "200 OK" message to the mobile terminal 50.

A sixth tunnel 61 represents a tunnel created between the correspondent terminal 58 and a foreign agent 52 corresponding to the newly changed FACoA. In step 558, an ACK message, which is transmitted from the correspondent terminal 58 to the mobile terminal 50 through the foreign agent 52, passes through the sixth tunnel 61. In step 559, voice packets, which are exchanged between the correspondent terminal 58 and the mobile terminal 50 via the foreign agent 52, pass through the sixth tunnel 61.

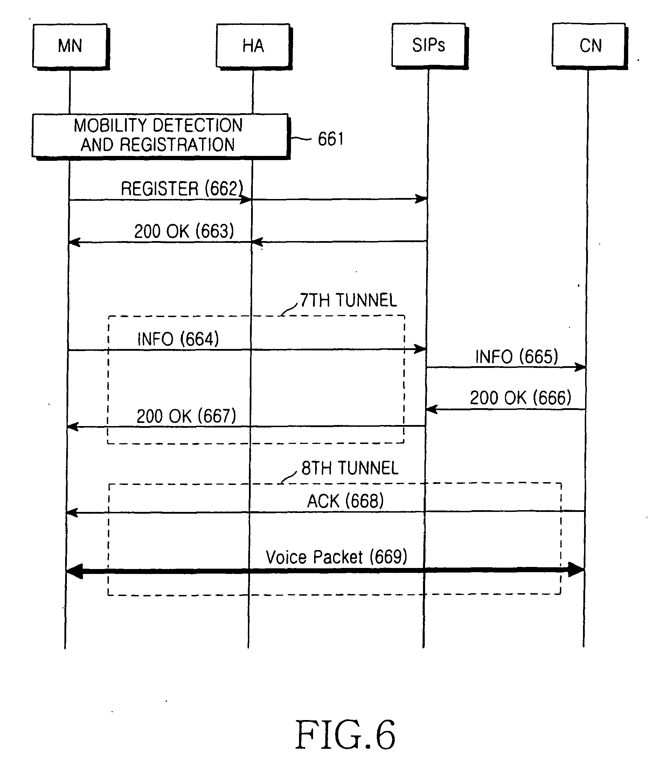

FIG 6 is a flow diagram showing a signaling sequence, in which a mobile terminal 60 notifies the correspondent terminal 66 of a changed CoA of the mobile terminal 60, when the mobile terminal 60 moves from a network to another network during a session, according to a fifth embodiment of the present invention. Herein, it is assumed that the C-CoA is used as described in the embodiment shown in FIG 4.

The description of the operations of steps 661 to 663 will be omitted as they are identical to the operations of steps 441 to 443,shown in FIG. 4 respectively.

The SIP server 64, that is, the registra server, and the foreign agent (not shown) obtain a C-CoA and a server IP address, which are included in a register message transmitted from the mobile terminal 60 in step 662, so that a seventh tunnel 71 shown is created.

In step 664, the mobile terminal 60 transmits an INFO message to the SIP server 64, that is, the proxy server. In this case, the INFO message is transmitted through the seventh tunnel 71 established between the proxy server 64 and the mobile terminal 60. In step 665, the proxy server transmits the INFO message to the correspondent terminal 66.

In step 666, the correspondent terminal 66, having received the INFO message, replaces an end point of the seventh tunnel 71 with a newly changed C-CoA, generates a "200 OK" message in response to the INFO message, and transmits the "200 OK" message to the proxy server 64. In step 667, the proxy server 64 transmits the "200 OK" message directly to the mobile terminal 60 through the seventh tunnel 71.

In FIG. 6, an eighth tunnel 81 represents a tunnel created between the correspondent terminal 66 and the mobile terminal 60 corresponding to the newly changed C-CoA. In step 668, an ACK message, which is transmitted from the correspondent terminal 66 to the mobile terminal 60, passes through the eighth tunnel 81. In step 669, voice packets, which are exchanged between the correspondent terminal 66 and the mobile terminal 60, pass through the eighth tunnel 81.

The above-mentioned operations are described on the assumption that the SIP server operates as a proxy server. If the SIP server is used as a redirect server, the sequence will be further simplified. That is, when the redirect server transmits a current C-CoA of the mobile terminal by means of a "200 OK" message to the a calling terminal, the calling terminal can establish a direct tunneling between the calling terminal and a called terminal, so that packets can be exchanged between the calling terminal and the called terminal. In this case, a tunnel between the SIP server SIPs and the called terminal is not necessary.

As compared with the embodiment of FIG. 5, the embodiment of FIG 6 enables messages, such as a register message, a "200 OK" message, an INFO message, and an ACK message, to be exchanged between the mobile terminal and the home agent without passing through the foreign agent.

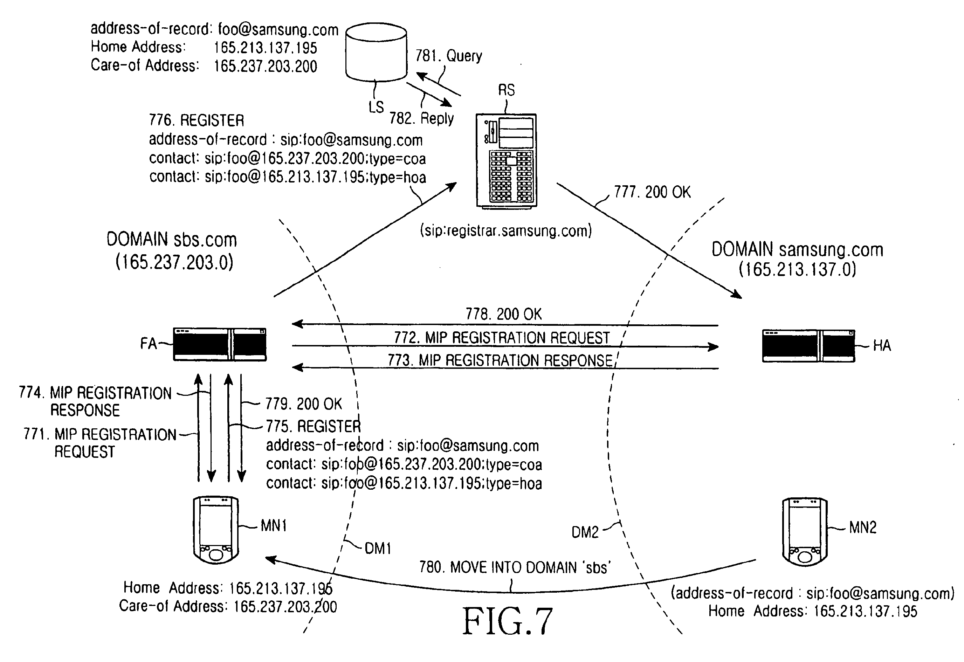

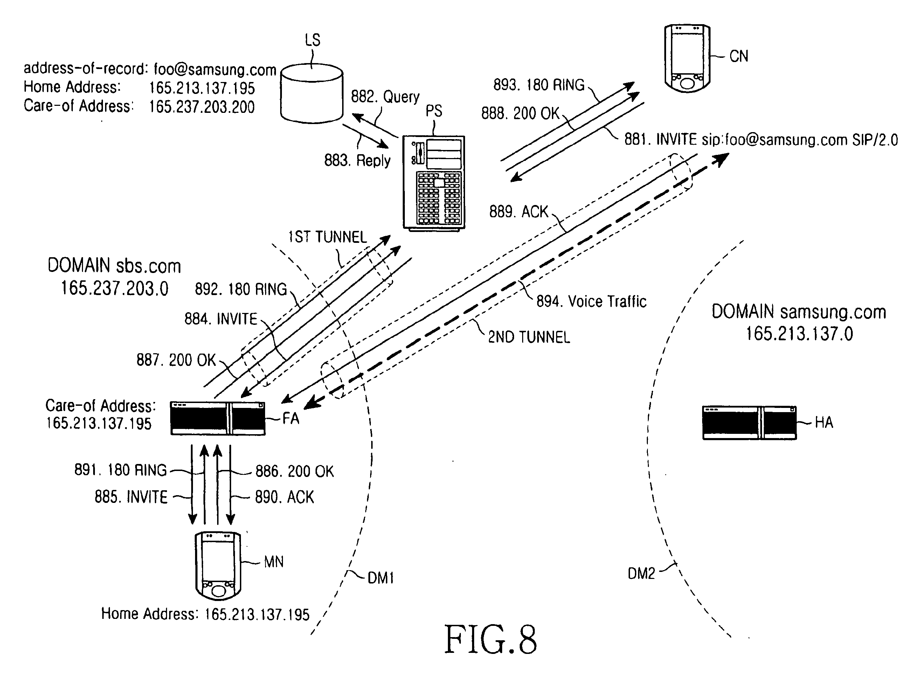

Hereinafter, the embodiment of FIG. 3 will be described in detail with reference to FIGS. 7 and 8.

FIG. 7 is a detailed view for explaining a mobile IP re-registration and SIP registration process in FIG 3, and FIG. 8 is a detailed view for explaining a routing-path optimizing process of a VoIP traffic using the SIP which is shown in FIG. 3.

Referring to FIG 7, steps 770 to 774 correspond to step 331 of FIG 3. As shown in FIG 7, a mobile terminal MN1 located in an area DM1 of domain "sbs.com" and a mobile terminal MN2 located in another area DM2 of domain "samsung.com" are physically the same terminal, but will be represented by reference numbers which are different from each other for convenient recognition with respect to the before and after location movement of the mobile terminal.

When the mobile terminal MN2 detects that the mobile terminal MN2 has moved from the area DM2 of domain "samsung.com" to the area DM1 of domain "sbs.com" (step 780), the mobile terminal requests a mobile IP registration from the foreign agent FA7 (step 771). The foreign agent FA7 having received the request transmits the mobile IP registration request to the home agent HA7 (step 772). The home agent HA7 receives the mobile IP registration request, and transmits a mobile IP registration response to the foreign agent FA7 (step 773). The foreign agent FA having received the response transmits the mobile IP registration response to the mobile terminal MN1 (step 774).

Steps 775 to 779 in FIG. 7 correspond to steps 332 and 333 in FIG 3. The mobile terminal MN1 transmits a register message, which includes a contact header into which its own home address and a new CoA (FACoA) are recorded, to the foreign agent FA7 (step 775). The foreign agent FA7 transmits the register message to the SIP server, that is, to the registra server RS7 (step 776). Then, the registra server RS7 receives and transfers the register message to the location server LS7 so that the location server LS7 may store the new CoA and the home address of an address-of-record of the mobile terminal MN1. The registra server RS7 transmits a "200 OK" message to the home agent HA7 as a response message with respect to the register message (step 777). The home agent HA7 transmits the "200 OK" message to the foreign agent FA7 (step 778). The foreign agent FA7 transmits the "200 OK" message to the mobile terminal MN1 (step 779).

While FIG. 7 is explained with reference to FIG. 3, it should be understood that FIG 7 can be used as a view for explaining a mobile IP re-registration and SIP registration process in each of FIGS. 4 to 6 in detail. That is, steps 770 to 774 may correspond to step 441 in FIG. 4, step 551 in FIG. 5, or step 661 in FIG. 6. Also, steps 775 to 779 may correspond to steps 442 and 443 in FIG. 4, steps 552 and 553 in FIG. 5, or steps 662 and 663 in FIG. 6.

Referring to FIG. 8, steps 881, 884, and 885 correspond to steps 334 and 335 in FIG. 3. Steps 891, 892 and 893 correspond to steps 336 and 337 in FIG 3. Steps 886, 887, and 888 correspond to steps 338 and 339 in FIG 3. Also, step 889 corresponds to step 340 as shown in FIG. 3.

In FIG. 8, a first tunnel 11 and a second tunnel 21 are represented by an identical reference numeral 91.

Unlike the voice traffic 123 of the prior art shown in FIG. 1 which is formed is in a triangular shape, voice traffic 894 according to the present invention is formed in a straight line as shown in FIG. 8.

In order to optimize a routing path of VoIP traffic, the SIP server functions as a location server LS8 and a proxy server PS8. The location server LS8 and the proxy server PS8 transfer and accept a query or a reply to or from each other. A query transferred from the proxy server PS8 to the location server LS8 is used to understand the CoA of a terminal invited by a correspondent terminal CN8 (step 882). A reply transferred from the location server LS8 to the proxy server PS8 includes the CoA of the terminal invited by the correspondent terminal CN8 (step 883).

According to the present invention as describe above, it is possible to solve the triangular routing problem which occurs when VoIP is used with a mobile terminal employing mobile IP. In addition, according to the present invention, owing to a shortened routing path, the delays which are often important factors in voice communication quality can be significantly reduced, and the load of the whole network is reduced, thus decreasing the loss of data, so that high-quality voice communication are achieved. '

While the present invention has been shown and described with reference to certain preferred embodiments thereof, it will be understood by those skilled in the art that various changes in form and details may be made therein without departing from the scope of the invention as defined by the appended claims. Accordingly, the scope of the invention is not to be limited by the above embodiments but by the claims.

## Claims

1. A mobile terminal based on a mobile Internet Protocol, a Voice-over-Internet Protocol, and a Session Initiation Protocol, the mobile terminal comprising:
a sensing unit for sensing movement of the mobile terminal into a another network;
a register message generating unit for generating a register message (332, 442, 552, 662) including a home address and a Care-of-Address, CoA, when location movement of the mobile terminal is sensed; and
a transmitting unit for transmitting the register message (332, 442, 552, 662) to a Session Initiation Protocol server (36, 44, 56, 64),
wherein the register message includes a parameter, which is used to determine whether an address indicated in a contact header of the register message is the home address or the CoA.

2. The mobile terminal as claimed in claim 1, wherein the transmission unit is operable to transmit the register message to the Session Initiation Protocol server (36, 44, 56, 64) through a foreign agent and a home agent.

3. The mobile terminal as claimed in claim 1 or 2, further comprising an information message generating unit operable to generate an information message including a new CoA and transmits the information message to a correspondent terminal, when movement of the mobile terminal toward a different network is sensed in a state in which a session is established between the mobile terminal and the correspondent terminal, so that the correspondent terminal replaces an end point of a tunnel with the new CoA when a tunneling is performed.

4. A Session Initiation Protocol server comprising:
a storage unit for storing a register message (332, 442. 552, 662) which includes a CoA and a home address transmitted from a first mobile terminal (30, 40, 50, 60);
a detecting unit for detecting the CoA of the first mobile terminal (30, 40, 50, 60) in the storage unit, in response to an invite message for the first mobile terminal (30, 40. 50, 60) transmitted from a second mobile terminal (38, 46, 58, 66); and
a transmitting unit for transmitting the invite message to the first mobile terminal according to the CoA of the first mobile terminal (30, 40, 50, 60),
wherein the register message includes a parameter, which is used to determine whether an address indicated in a contact header of the register message is the home address or the CoA.

5. The Session Initiation Protocol server as claimed in claim 4, wherein the Session Initiation Protocol server is operable to create a tunnel between the Session Initiation Protocol server and the first mobile terminal with reference to the CoA, and to transmit the invite message through the tunnel.

6. The Session Initiation Protocol server as claimed in claim 4 or 5, wherein the home address and the CoA are operated upon using an address-of-record as a key.

7. A method for controlling a routing path for a Voice-over-Internet Protocol service based on a mobile Internet Protocol and a Session Initiation Protocol, the method comprising the steps of:
a mobile terminal (30) sensing movement of the mobile terminal (30) into a different network and performing a mobile Internet Protocol re-registration;
the mobile terminal (30) transmitting a register message (332), which includes a Foreign Agent Care-of Address, FACoA, and a home address of the mobile terminal, to a Session Initiation Protocol server (36) after performing the mobile Internet Protocol re-registration through a foreign agent (32), thereby carrying out a Session Initiation Protocol registration;
the Session Initiation Protocol server (36) creating a tunnel (11) between the Session Initiation Protocol server (36) and the foreign agent (32) with reference to the register message (332) when receiving an invite message (334) from a correspondent terminal (38) after the Session Initiation Protocol registration is carried out, and transmitting the invite message to the mobile terminal through the tunnel (11); and
the foreign agent (32) creating an additional tunnel (21) between the foreign agent (32) and the correspondent terminal (38) when receiving a response (338) from the mobile terminal (30) having received the invite message, and the mobile terminal (30) and the correspondent terminal (38) exchanging voice packets (341) with each other through the additional tunnel(21),
wherein the register message includes a parameter, which is used to determine whether an address indicated in a contact header of the register message is the home address or the FACoA.

8. A method for controlling a routing path for a Voice-over-Internet Protocol service based on a mobile Internet Protocol and a Session Initiation Protocol, the method comprising the steps of:
a mobile terminal (50) sensing movement of the mobile terminal (50) into a different network while communicating, and performing a mobile Internet Protocol re-registration;
the mobile terminal (50) transmitting a register message (552), which includes a Foreign Agent Care-of Address, FACoA, and a home address of the mobile terminal, to a Session Initiation Protocol server (56) through a foreign agent (52) after performing the mobile Internet Protocol re-registration, thereby carrying out a registration;
the foreign agent (52) creating a tunnel (51) between the foreign agent (52) and the Session Initiation Protocol server (56), when receiving a response (553) to the registration, which is intended to be transmitted from the Session Initiation Protocol server (56) to the mobile terminal (50), through a home agent, and transmitting an information message (554), which includes the FACoA generated from the mobile terminal, to the Session Initiation Protocol server through the tunnel (51); and
the correspondent terminal (58) creating an additional tunnel (61) which uses the FACoA as an end point when receiving the information message from the Session Initiation Protocol server (56), and the mobile terminal (50) and the correspondent terminal (58) exchanging voice packets with each other through the additional tunnel (61),
wherein the register message includes a parameter, which is used to determine whether an address indicated in a contact header of the register message is the home address or the FACoA.

## Patentansprüche

1. Mobil-Endgerät, das auf einem Mobile-Internet-Protokoll, einem Voice-over-Internet-Protokoll und einem Session-Initiation-Protokoll basiert, wobei das Mobil-Endgerät umfasst:
eine Erfassungseinheit zum Erfassen von Bewegung des Mobil-Endgerätes in ein anderes Netzwerk hinein;
eine Einheit zum Erzeugen einer Registrier-Nachricht, mit der eine Registrier-Nachricht (332, 442, 552, 662) erzeugt wird, die eine Home-Adresse und eine Care-of-Adresse enthält, wenn Standortverschiebung des Mobil-Endgerätes erfasst wird; und
eine Sendeeinheit zum Senden der Registrier-Nachricht (332, 442, 552, 662) zu einem SIP-Server (Session Initiation Protocol server) (36, 44, 56, 64),
wobei die Registrier-Nachricht einen Parameter enthält, der verwendet wird, um festzustellen, ob eine in einem Kontakt-Header der Registrier-Nachricht angezeigte Adresse die Home-Adresse oder die Care-of-Adresse ist.

2. Mobil-Endgerät nach Anspruch 1, wobei die Sendeeinheit in Funktion die Registrier-Nachricht über einen Foreign Agent und einen Home Agent zu dem SIP-Server (36, 44, 56, 64) senden kann.

3. Mobil-Endgerät nach Anspruch 1 oder 2, das des Weiteren eine Einheit zum Erzeugen einer Informations-Nachricht umfasst, die in Funktion eine Informations-Nachricht erzeugen kann, die eine neue Care-of-Adresse enthält, und die die Informations-Nachricht zu einem korrespondierenden Endgerät sendet, wenn eine Bewegung des Mobil-Endgerätes zu einem anderen Netzwerk in einem Zustand erfasst wird, in dem eine Sitzung zwischen dem Mobil-Endgerät und dem korrespondierenden Endgerät eingerichtet ist, so dass das korrespondierende Endgerät einen Endpunkt eines Tunnels durch die neue Care-of-Adresse ersetzt, wenn ein Tunneling-Vorgang durchgeführt wird.

4. SIP-Server (Session Initiation Protocol server), der umfasst:
eine Speichereinheit zum Speichern einer Registrier-Nachricht (332, 442, 552, 662), die eine Care-of-Adresse sowie eine Home-Adresse enthält und von einem ersten Mobil-Endgerät (30, 40, 50, 60) gesendet wird;
eine Erfassungseinheit zum Erfassen der Care-of-Adresse des ersten Mobil-Endgerätes (30, 40, 50, 60) in der Speichereinheit in Reaktion auf eine Invite-Nachricht für das erste Mobil-Endgerät (30, 40, 50, 60), die von einem zweiten Mobil-Endgerät (38, 46, 58, 66) gesendet wird; und
eine Sendeeinheit zum Senden der Invite-Nachricht zu dem ersten Mobil-Endgerät entsprechend der Care-of-Adresse des ersten Mobil-Endgerätes (30, 40, 50, 60),
wobei die Registrier-Nachricht einen Parameter enthält, der verwendet wird, um festzustellen, ob eine in einem Kontakt-Header der Registrier-Nachricht angezeigte Adresse die Home-Adresse oder die Care-of-Adresse ist.

5. SIP-Server nach Anspruch 4, wobei der SIP-Server in Funktion einen Tunnel zwischen dem SIP-Server und dem ersten Mobil-Endgerät unter Bezugnahme auf die Care-of-Adresse erzeugen und die Invite-Nachricht über den Tunnel senden kann.

6. SIP-Server nach Anspruch 4 oder 5, wobei die Home-Adresse und die Care-of-Adresse unter Verwendung einer Address of Record (AoR) als ein Schlüssel bearbeitet werden.

7. Verfahren zum Steuern eines Routing-Weges für einen VoIP-Dienst (Voice-over-Internet Protocol service), der auf einem Mobile-Internet-Protokoll und einem Session-Initiation-Protocol basiert, wobei das Verfahren die folgenden Schritte umfasst:
Erfassen von Bewegung eines Mobil-Endgerätes (30) in ein anderes Netzwerk hinein durch das Mobil-Endgerät (30) und Durchführen einer Mobile-IP-Vorregistrierung (mobile Internet Protocol re-registration);
Senden einer Registrier-Nachricht (332), die eine Foreign-Agent-Care-of-Adresse (FACoA) und eine Home-Adresse des Mobil-Endgerätes enthält, durch das Mobil-Endgerät (30) zu einem SIP-Server (Session-Initiation-Protocol server) (36) nach Durchführen der Mobile-IP-Vorregistrierung über einen Foreign Agent (32), um so eine SIP-Registrierung auszuführen;
Erzeugen eines Tunnels (11) zwischen dem SIP-Server (36) und dem Foreign Agent (32) unter Bezugnahme auf die Registrier-Nachricht (332) durch den SIP-Server (36) beim Empfangen einer Invite-Nachricht (3349 von einem korrespondierenden Endgerät (38), nachdem die SIP-Registrierung ausgeführt ist, und Senden der Invite-Nachricht zu dem Mobil-Endgerät über den Tunnel (11); und
Erzeugen eines zusätzlichen Tunnels (21) zwischen dem Foreign Agent (32) und dem korrespondierenden Endgerät (38) durch den Foreign Agent (32) beim Empfang einer Antwort (338) von dem Mobil-Endgerät (30), das die Invite-Nachricht empfangen hat, wobei das Mobil-Endgerät (30) und das korrespondierende Endgerät (38) Sprach-Pakete (341) über den zusätzlichen Tunnel (21) miteinander austauschen,
wobei die Registrier-Nachricht einen Parameter enthält, der verwendet wird, um festzustellen, ob eine in einem Kontakt-Header der Registrier-Nachricht angezeigte Adresse die Home-Adresse oder die Foreign-Agent-Care-of-Adresse ist.

8. Verfahren zum Steuern eines Routing-Weges für einen VoIP-Dienst (Voice-over-Internet Protocol service), der auf einem Mobile-Internet-Protokoll und einem Session-Initiation-Protokoll basiert, wobei das Verfahren die folgenden Schritte umfasst:
Erfassen von Bewegung eines Mobil-Endgerätes (50) in ein anderes Netzwerk hinein durch ein Mobil-Endgerät (50) und Durchführen einer Mobile-IP-Vorregistrierung (mobile Internet Protocol re-registration);
Senden einer Registrier-Nachricht (552), die eine Foreign-Agent-Care-of-Adresse (FACoA) und eine Home-Adresse des Mobil-Endgerätes enthält, durch das Mobil-Endgerät (50) zu einem SIP-Server (Session-Initiation-Protocol server) (56) nach Durchführen der Mobile-IP-Vorregistrierung über einen Foreign Agent (52), um so eine SIP-Registrierung auszuführen;
Erzeugen eines Tunnels (51) zwischen dem Foreign Agent (52) und dem SIP-Server (56) durch den Foreign Agent (52) beim Empfangen einer Antwort (553) auf die Registrierung, die von dem SIP-Server (56) zu dem Mobil-Endgerät (50) gesendet werden soll, über einen Home Agent und Senden einer Informations-Nachricht (454), die die Foreign-Agent-Care-of-Adresse enthält, die von dem Mobil-Endgerät erzeugt wird, zu dem SIP-Server über den Tunnel (51); und
Erzeugen eines zusätzlichen Tunnels (61), der die Foreign-Agent-Care-of-Adresse als einen Endpunkt verwendet, durch das korrespondierende Endgerät (58) beim Empfangen der Informations-Nachricht von dem SIP-Server (56), und Austauschen von Sprach-Paketen durch das Mobil-Endgerät (50) und das korrespondierende Endgerät (58) miteinander über den zusätzlichen Tunnel (61),
wobei die Registrier-Nachricht einen Parameter enthält, der verwendet wird, um festzustellen, ob eine in einem Kontakt-Header der Registrier-Nachricht angezeigte Adresse die Home-Adresse oder die Foreign-Agent-Care-of-Adresse ist.

## Revendications

1. Terminal mobile fondé sur un protocole Internet mobile, un protocole de téléphonie sur Internet et un protocole d'initiation de session, le terminal mobile comprenant :
- une unité de détection pour détecter un mouvement du terminal mobile vers un autre réseau ;
- une unité de génération de message de registre pour générer un message de registre (332, 442, 552, 662) incluant une adresse d'origine et une adresse temporaire, CoA, lorsqu'un mouvement de la position du terminal mobile est détecté ; et
- une unité de transmission pour transmettre le message de registre (332, 442, 552, 662) à un serveur de protocole d'initiation de session (36, 44, 56, 64) ;
- dans lequel le message de registre inclut un paramètre, qui est utilisé pour déterminer si une adresse indiquée dans un en-tête de contact du message de registre est l'adresse d'origine ou la CoA.

2. Terminal mobile selon la revendication 1, dans lequel l'unité de transmission est utilisable pour transmettre le message de registre au serveur de protocole d'initiation de session (36, 44, 56, 64) par un agent étranger et d'un agent d'origine.

3. Terminal mobile selon les revendications 1 ou 2, comprenant en outre une unité de génération de message d'information utilisable pour générer un message d'information incluant une nouvelle CoA et transmettre le message d'information à un terminal de correspondant, lorsqu'un mouvement du terminal mobile vers un réseau différent est détecté dans un état dans lequel une session est établie entre le terminal mobile et le terminal de correspondant, de sorte que le terminal de correspondant remplace un point d'extrémité d'un tunnel par la nouvelle CoA quand la création d'un tunnel est effectuée.

4. Serveur de protocole d'initiation de session, comprenant :
- une unité de stockage pour stocker un message de registre (332, 442, 552, 662), qui inclut une CoA et une adresse d'origine, transmis depuis un premier terminal mobile (30, 40, 50, 60) ;
- une unité de détection pour détecter la CoA du premier terminal mobile (30, 40, 50, 60) dans l'unité de stockage, en réponse à un message d'invite pour le premier terminal mobile (30, 40, 50, 60) transmis depuis un deuxième terminal mobile (38, 46, 58, 66) ; et
- une unité de transmission pour transmettre le message d'invite au premier terminal mobile suivant la CoA du premier terminal mobile (30, 40, 50, 60) ;
- dans lequel le message de registre inclut un paramètre, qui est utilisé pour déterminer si une adresse indiquée dans un en-tête de contact du message de registre est l'adresse d'origine ou la CoA.

5. Serveur de protocole d'initiation de session selon la revendication 4, dans lequel le serveur de protocole d'initiation de session est utilisable pour créer un tunnel entre le serveur de protocole d'initiation de session et le premier terminal mobile, avec une référence à la CoA, et transmettre le message d'invite par le tunnel.

6. Serveur de protocole d'initiation de session selon les revendications 4 ou 5, dans lequel l'adresse d'origine et la CoA sont utilisées lors de l'utilisation d'une adresse d'enregistrement comme clé.

7. Procédé de commande d'un chemin de routage pour un service de protocole de téléphonie sur Internet fondé sur un protocole Internet mobile et un protocole d'initiation de session, le procédé comprenant les étapes consistant à ce que :
- un terminal mobile (30) détecte un mouvement du terminal mobile (30) vers un réseau différent et effectue un réenregistrement du protocole Internet mobile ;
- le terminal mobile (30) transmette un message de registre (332), qui inclut une adresse temporaire d'agent étranger, FACoA, et une adresse d'origine du terminal mobile, à un serveur de protocole d'initiation de session (36) après avoir effectué le réenregistrement du protocole Internet mobile par un agent étranger (32), effectuant ainsi un enregistrement de protocole d'initiation de session ;
- le serveur de protocole d'initiation de session (36) crée un tunnel (11) entre le serveur de protocole d'initiation de session (36) et l'agent étranger (32) avec une référence au message de registre (332), lorsqu'il reçoit un message d'invite (334) d'un terminal de correspondant (38) après que l'enregistrement de protocole d'initiation de session a été effectué, et transmette le message d'invite au terminal mobile par le tunnel (11) ; et
- l'agent étranger (32) crée un tunnel supplémentaire (21) entre l'agent étranger (32) et le terminal de correspondant (38), lorsqu'il reçoit une réponse (338) du terminal mobile (30) ayant reçu le message d'invite, et le terminal mobile (30) et le terminal de correspondant (38) échangent des paquets vocaux (341) l'un avec l'autre par le tunnel supplémentaire (21) ;
- dans lequel le message de registre inclut un paramètre, qui est utilisé pour déterminer si une adresse indiquée dans un en-tête de contact du message de registre est l'adresse d'origine ou la FACoA.

8. Procédé de commande d'un chemin de routage pour un service de protocole de téléphonie sur Internet fondé sur un protocole Internet mobile et un protocole d'initiation de session, le procédé comprenant les étapes consistant à ce que :
- un terminal mobile (50) détecte un mouvement du terminal mobile (50) vers un réseau différent, tout en communiquant, et effectue un réenregistrement du protocole Internet mobile ;
- le terminal mobile (50) transmette un message de registre (552), qui inclut une adresse temporaire d'agent étranger, FACoA, et une adresse d'origine du terminal mobile, à un serveur de protocole d'initiation de session (56) par un agent étranger (52) après avoir effectué le réenregistrement du protocole Internet mobile, effectuant ainsi un enregistrement ;
- l'agent étranger (52) crée un tunnel (51) entre l'agent étranger (52) et le serveur de protocole d'initiation de session (56), lorsqu'il reçoit une réponse (553) à l'enregistrement, qui est destinée à être transmise du serveur de protocole d'initiation de session (56) au terminal mobile (50), par un agent d'origine, et transmette un message d'information (554), qui inclut la FACoA générée depuis le terminal mobile, au serveur de protocole d'initiation de session par le tunnel (51) ; et
- le terminal de correspondant (58) crée un tunnel supplémentaire (61), qui utilise la FACoA comme point d'extrémité, lorsqu'il reçoit le message d'information du serveur de protocole d'initiation de session (56), et le terminal mobile (50) et le terminal de correspondant (58) échangent des paquets vocaux l'un avec l'autre par le tunnel supplémentaire (61) ;
- dans lequel le message de registre inclut un paramètre, qui est utilisé pour déterminer si une adresse indiquée dans un en-tête de contact du message de registre est l'adresse d'origine ou la FACoA.
